# EUROPEAN PATENT APPLICATION

(11) **EP 4 545 448 A1**
(43) Date of publication of application: **30.04.2025**
(21) Application number: 23206490.7
(22) Date of filing: 27.10.2023
(51) Int. Cl.: B65G 1/04, B65D 25/00, B65G 1/137

(54) **SIDE-ACCESSIBLE GOODS HOLDER AND METHOD**

(71) Applicant: AUTOSTORE TECHNOLOGY AS, 5578 Nedre Vats (NO)
(72) Inventor: HEGGEBO, Jorgen, 5578 Nedre Vats (NO)
(74) Representative: Finlayson, Scott Henry

(57) **Abstract**

The invention relates to a side-accessible goods holder (130) comprising a storage area for storing product items and a closable side-access opening, the goods holder being configured to interact with a moving device to close the side opening while being moved to an access position by the moving device, and open the side access opening when the goods holder is at the access position, a method and a system.

## Description

### FIELD OF THE INVENTION

The present invention relates to a side-accessible goods holder for an automated storage and retrieval system, a method for handling a goods holder of an automated storage and retrieval system, a system comprising a side-accessible goods holder, and an automated storage and retrieval system comprising a side-accessible goods holder.

### BACKGROUND AND PRIOR ART

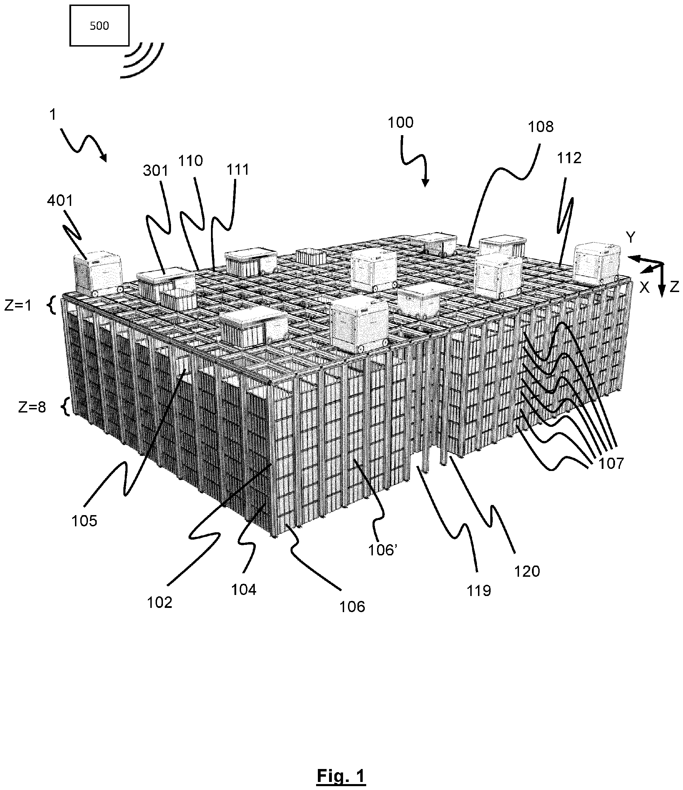

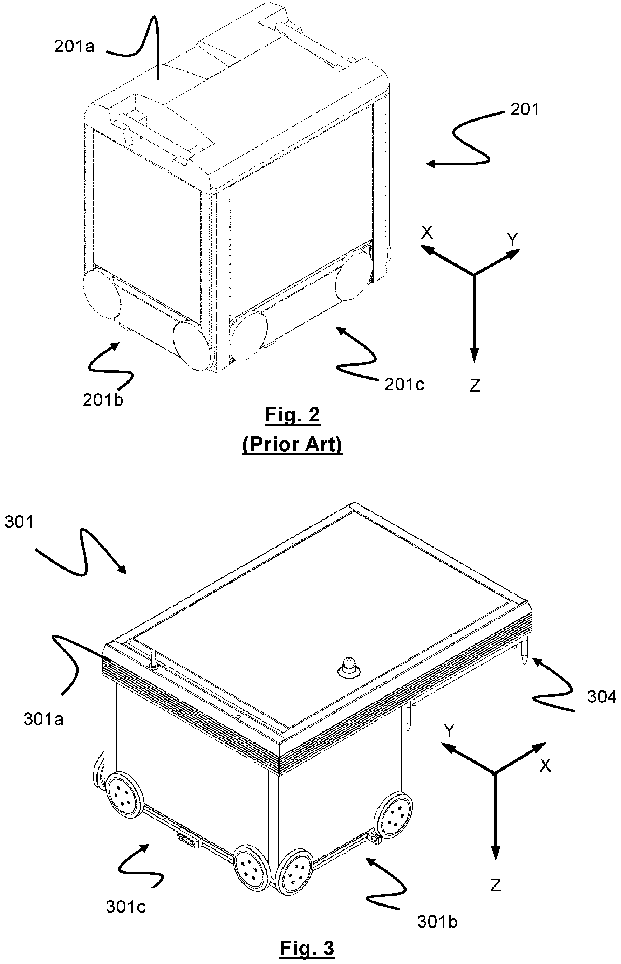

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the frame structure 100, and a second set of parallel rails 111 arranged perpendicular to the first set of rails 110 to guide movement of the container handling vehicles 201,301,401 in a second direction *Y* which is perpendicular to the first direction *X*. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal (X-Y) plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

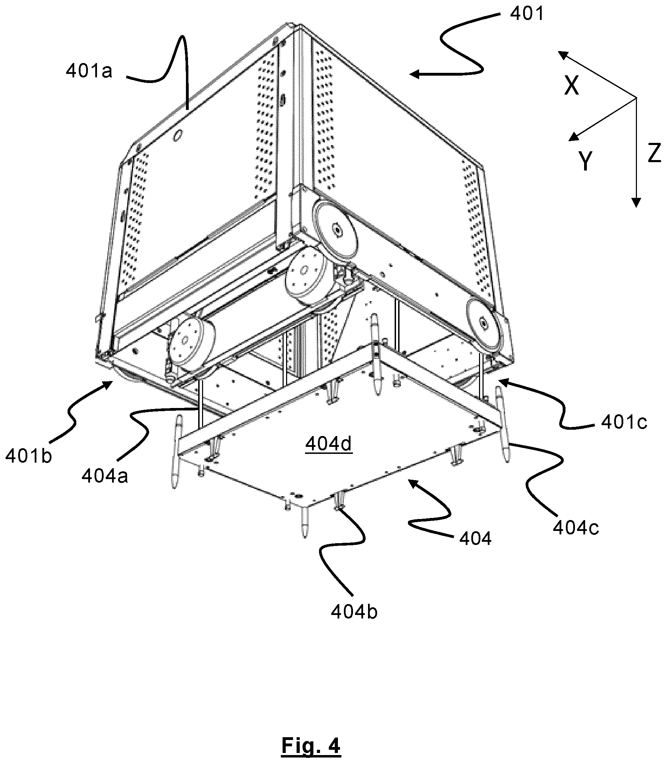

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y.* Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1 ... *n* and *Y*=1 ... *n* identifies the position of each storage column 105 in the horizontal plane. Consequently, as an example, and using the Cartesian coordinate system *X*, *Y*, *Z* indicated in Fig. 1, the storage container identified as 106' in Fig. 1 can be said to occupy storage position *X*=17, *Y*=1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y*-direction, while each storage cell may be identified by a container number in the *X-*, *Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term `lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

In many shops, replenishment of goods is mostly done by human labor, which is both time consuming and expensive. Thus, there is a potential for cost reduction and improved efficiency if replenishment of goods can be done automatically e.g. by use of remotely operated vehicles.

WO2017148895A1 discloses containers which can be stacked one on top of another whilst still permitting access to the contents of any container within the stack without the need for destacking. It is disclosed a container having an inner part slidably engaged within an outer part to allow the container to be opened and closed.

In view of all of the above, it is desirable to provide a solution that solves or at least mitigates one or more of the aforementioned problems belonging to the prior art.

### SUMMARY OF THE INVENTION

Typically, and as described in the background section, in order to access an item stored in a container of the system, the target storage container is retrieved from its position in a storage column and transported to a drop-off port column by a container handling vehicle. However, with the present invention, it is proposed to integrate a system of the type described in conjunction with Fig. 1 with a retail establishment. The system may be used for automatic replenishment of goods in a shop where it is desirable to present the product items to customers in stacks of storage containers within the framework structure of the system and allow customers to access to the items stored in the containers without the need for removing the container from its storage position in the stack and e.g. move it to a drop-off port column for picking. Furthermore, it may also be desirable to access the items stored in the container without the need for using a container handling vehicle for digging or transport of the container.

Thus, the present invention is set forth and characterized in the independent claims, while the dependent claims describe other characteristics of the invention.

In one aspect, the invention is related to a method for handling a goods holder of an automated storage and retrieval system during movement of the goods holder by a lifting device. The goods holder is stackable with other goods holders in a storage column of the automated storage and retrieval system. The goods holder is a side-accessible goods holder and comprises a base, a first side wall arranged on a first side of the goods holder, a second side wall arranged on a second side of the goods holder, the first and second side walls extending upwardly from the base and forming a storage area for storing product items therebetween. The side-accessible goods holder comprises a side-access opening allowing access into the storage area from a third side of the goods holder. The method comprises:
- when the goods holder is being moved by the lifting device, closing the side-access opening with a barrier such that the product items stored inside the storage area are prevented from falling out through the side-access opening, and wherein
- when the goods holder is placed in the storage column, removing the barrier from the side-access opening by using the lifting device to provide access to the product items inside the goods holder from the third side of the container.

Thus, the method allows for an automated storage and retrieval system to transport and lower/raise side-accessible goods holders into stacks in storage columns, keeping the product items in the goods holder secured during all movements of the goods holder, and providing access for users, e.g. customers in a retail establishment, so that they may see and pick goods from the interior of the goods holder.

The side-accessible goods holder may comprise more than one side-access opening. Thus, one barrier should be provided for each side-access opening. The side-accessible goods holder may for example comprise a first side-access opening allowing access into the storage area from the third side of the goods holder and a second side-access opening allowing access into the storage area from a fourth side of the goods holder. The third side and the fourth sides may be at opposite sides of the base.

The barrier may be a panel or a cover.

The barrier should remain removed for as long as the side-accessible goods holder is placed in the stack to provide instant and continuous access to a customer, i.e. without the need to remove a barrier, cover, panel etc. from the goods holder. The method may therefor comprise keeping the barrier removed until the goods holder is to be moved by the lifting device.

The method may thus comprise closing each of the side-access openings with a barrier such that the product items stored inside the storage area are prevented from falling out through the side-access openings.

A container handling device comprising a lifting device may be used to move a number of goods holders to a storage column and to place said goods holders on top of one another in the storage column using the lifting device to form a stack of goods holders. The goods holders of the stack may be a stack of side-accessible goods holders or a stack comprising a combination of side-accessible goods holders and other types of goods holders or stackable structures, e.g. open-top storage containers having a closed bottom and four closed sides. Although the side-accessible goods holder may comprise an open top, the interior of the goods holder, i.e. the storage area, may not be accessed through the top when another goods holder is placed on top of the side-accessible goods holder. Thus, the side-access opening allows for access into the interior of the goods holder and allows for product items to be removed from or inserted into the storage area of the goods holder through the side-access opening.

Removal of the barrier may involve moving the barrier from a retaining position, in which access into the storage area from the third side of the goods holder is prevented, to a non-retaining position, in which access into the storage area from the third side of the goods holder is permitted. The retaining position may be an operating position of the barrier on the goods holder.

Removal of the barrier may involve moving the barrier to a different position on the goods holder or separating the barrier from the goods holder.

Thus, the non-retaining position may be a retracted position on the goods holder, or a detached position where the barrier is completely removed from the goods holder. The non-retaining, detached position may be a position within the storage column.

Moving the barrier on the goods holder may involve retracting the barrier to the retracted position using the lifting device.

Separating the barrier from the goods holder may involve lifting the barrier using the lifting device to a position above the goods holder. Thus, the non-retaining, detached position may be an elevated position compared to the retaining position, i.e. a position above the goods holder. The lifting device may then move the barrier further away to a remote position which may e.g. be at another location in the storage system.

The barrier is configured to remain within the footprint of the goods holder when it is in the retaining position and when it is in the non-retaining position inside the storage column.

The barrier is also configured to remain within the footprint of the goods holder in the lateral plane for as long as it is attached to the goods holder, i.e. when it is in the retaining position and when it is in the non-retaining position on the goods holder.

The automated storage and retrieval system may be identical to the prior art automated storage and retrieval system described in relation to Fig. 1. The lifting device may be arranged on a container handling device operable on the rail system of the automated storage and retrieval system. The container handling device may be container handling vehicle as described in relation to Figs. 2-4.

The step of closing the side-access opening may comprise using the lifting device to move the barrier from a retracted position on the side-accessible goods holder to an operating position on the side-accessible goods holder, in which operating position it covers the side-access opening.

The lifting device may thus activate or move the retractable barrier(s) so that the side-access opening(s) are closed before moving (e.g. transporting or lowering/raising) the side-accessible goods holder, unless the retractable barrier(s) are already in operating position. Activation causes the retractable barrier(s) to move or extend to the operating position, where the barrier(s) covers the side-access openings.

The lifting device may thus deactivate or move the retractable barrier(s) so that the side-access opening(s) are opened after having placed the side-accessible goods holder in a storage position in a storage column. Deactivation causes the retractable barrier(s) to move or retract to the retracted position, where the barrier(s) do not cover the side-access opening(s).

The lifting device may comprise a barrier configured to cover the side-access opening of the side-accessible goods holder, wherein the step of closing the side access opening may comprise lowering the lifting device until the barrier covers the side-access opening.

The barrier may extend downwardly or be moveable to a position where it extends downwardly from the lifting device. The method may thus comprise the step of moving the barrier to the position where it extends downwardly from the lifting device, before lowering the lifting device.

The lifting device may comprise gripping elements for engaging corresponding gripping structures on the side-accessible goods holder. The barrier may be configured to cover the side-access opening of the side-accessible goods holder when the gripping elements are engaged with the gripping structures. Thus, the method may comprise engaging the gripping elements with the gripping structures on the side-accessible goods holder.

The barrier may be configured to engage with the side-access opening.

The barrier may be inserted into tracks or slots in the side edges of the side-access opening and may be slid down the tracks or slots.

The lifting device may comprise an adapter detachably arranged on the lifting device, wherein the barrier and the gripping elements are arranged on the adapter. The step of closing the side-access opening thus may comprise lowering the lifting device with the adapter until the barrier covers the side-access opening.

If the adapter is not already attached to the lifting device, the method may comprise the step of attaching the adapter to the lifting device.

The method may comprise using a container handling vehicle to transport the side-accessible goods holder within an automated storage and retrieval system, wherein the goods holder may be transported from a storage section of the system to a user-accessible retail section of the system.

In a second aspect, the invention concerns a side-accessible goods holder for use in a method according to any of the above paragraphs, the goods holder comprising a base, a first side wall arranged on a first side of the goods holder, a second side wall arranged on a second side of the goods holder, the second side being opposite the first side, the first and second side walls extending upwardly from the base and forming a storage area for storing product items therebetween, wherein the goods holder is configured for being stacked in a stack of goods holders in a storage column of an automated storage and retrieval system and for being moved by a lifting device of the system, and
- wherein the goods holder comprises a side-access opening allowing product items to exit the storage area through the side-access opening, and
- wherein the side-access opening is configured to receive a barrier for preventing the product items from exiting the storage area through the side-access opening.

The invention thus provides a stackable goods holder for use in an automated storage and retrieval system wherein the product items stored in the interior of the goods holder are accessible and may be taken out of the goods holder while another goods holder is stacked on top of it, and wherein the product items stored inside the goods holder remain secured within the goods holder during handling by lifting device.

The first and second side walls of the goods holder may be at opposite sides of the base, preferably they are arranged at the periphery of the base.

The side-access opening may be configured for receiving the barrier, to prevent access through the side-access opening when the goods holder is being moved by the lifting device. Thus, the side-access opening may be configured to cooperate with the barrier for selectively preventing access into the storage area. The side access opening may for example comprise an outer face or an inner face suitable for having a face of the barrier placed against it to close the opening.

The side-access opening may be provided on a third side of the goods holder, which may be perpendicular to the first and/or second sides.

The side-access opening may be configured for receiving the barrier from above.

The side-access opening may comprise a barrier interface, such as tracks or slots, for receiving the barrier. The barrier interface may be configured to receive the barrier from above, allowing the barrier to slide down into a position where it prevents access into or out of the storage area through the side-access opening.

Thus, the side-accessible goods holder is configured for being in a retaining configuration and in an open-side configuration, wherein when in the retaining configuration, the side-access opening is closed by a cooperative barrier, and wherein when in the open-side configuration, access to the storage area through the side-access opening is provided.

The retaining configuration is particularly suitable for use when the goods holder is to be handled by a lifting device, such as during raising from or lowering into the storage column, or when being transported by a container handling vehicle. The barrier ensures that the items stored inside the storage area of the goods holder do not fall out through the side- access opening during these situations.

The open-side configuration is particularly suitable for use when the goods holder is stacked in a storage column and where persons should have access to the items within the goods holder. The side-access opening then allows access to the items stored in the storage area inside the goods holder and it allows removal of items from or insertion of items into the storage area through the side-access opening even while another goods holder is stacked on top of it.

Thus, the side-access opening allows product items to exit the storage area through the side-access opening while the top of the goods holder is closed, e.g. while another goods holder is stacked on top of said side-accessible goods holder.

The side-access opening may be an open side of the goods holder, or it may be an opening in a side wall of the side-accessible goods holder.

The side-accessible goods holder may comprise rectangular shape, i.e. a rectangular base. The base may thus comprise a first set of side edges and a second set of side edges, the second set of side edges being longer than the first set.

The side-accessible goods holder comprises a lower stacking interface and a complementary upper stacking interface to allow several side-accessible goods holders to be stacked on top of one another.

The base comprises a bottom face which may comprise the lower stacking interface. The base comprises a top face opposite the bottom face, which top face is the surface on which the product items may be placed. The upper stacking interface may e.g. be at the upper rim of the first and second side walls.

The first and second side walls of the goods holder may be a first set of side walls of a first length. The goods holder preferably comprises an open top or an opening in a top panel.

The side-accessible goods holder may comprise a second set of side walls of a second length. The second set of side walls may comprise one or two side walls arranged on the third and a fourth side of the goods holder. The walls of the second set may be longer than the walls of the first set.

The walls of the first and/or the second set of side walls may be arranged vertically relative to the base. The walls of first set of sidewalls may be parallel and/or the walls of the second set of side walls may be parallel. The walls of the second set of side walls may be perpendicular to the walls of the first set of side walls.

The side-accessible goods holder may comprise four side walls, wherein one of the walls comprises a side-access opening.

The side-accessible goods holder may comprise two side-access openings arranged at opposite sides of the goods holder, thus providing access from two opposite sides of a stack.

The side-access opening(s) is/are preferably provided on the third side and fourth side of the goods holder, which may be the long sides of a goods holder with a rectangular base.

The side walls comprise an inner face facing the storage area of the side-accessible goods holder, and an outer face, opposite the inner face.

The first and second side walls preferably comprises a first set of gripping structures configured to engage with corresponding gripping elements of the lifting device.

The gripping structures may be recesses arranged at an upper rim of the first and second side walls.

The stack of goods holders may comprise only side-accessible goods holders or a combination of side-accessible goods holders and other goods holders or structures having the same stacking interface as the side-accessible goods holders.

The side-access opening may be provided by an open side of the goods holder or by an opening in a side wall of the goods holder.

The first and second side walls of the goods holder may be the walls of the first set of side walls of a first length, and wherein the goods holder comprises a third side wall perpendicularly arranged to the first and second side walls, the third side wall having a second length.

Thus, the side-access opening may be provided by an open side of the goods holder, i.e. a side lacking a wall, opposite the third side wall. The second length may be longer than the first length.

The goods holder may comprise a fourth side wall arranged opposite the third side wall, and wherein the side-access opening is provided in the third and/or the fourth side wall.

The goods holder may thus comprise a second set of side walls comprising the third and fourth side walls. The second set of side walls may be longer than the first set of side walls. The walls of the second set of side walls may be arranged at opposite sides of the base.

The side-access opening may be a cut-out, opening or recess in the third and/or fourth side wall. The side-access opening may extend to the top opening of the goods holder.

One barrier should be provided for each side-access opening. The barriers may all be identical.

The side-accessible goods holder is especially suitable for use in shops where the customers usually pick items from shelves or displays in the shop. When the automated storage and retrieval system is implemented in a shop, a person may pick the desired product items directly from the side-accessible goods holders of a stack of the system. A problem with having a side-accessible goods holder in an automated storage and retrieval system is that when the goods holder is moved by a container handling device, the product items may fall out of the goods holder through the side openings. Therefore, the present invention ensures that the opening that allow access to the interior of the goods holder when placed in a stack are closed during such movement by the container handling device.

The side-accessible goods holder allows integration of a customer access point with an automated storage and retrieval system making the transition of goods from storage to retail or customer access more efficient and cost efficient as replenishment of goods can be done automatically and without the need for human labor.

Of course, there is a safety aspect which needs to be considered for such a system. A person should not be able to pick items from the stack while a lifting device is operating in that stack. Therefore, a system for ensuring that a person is prevented from accessing a stack while a lifting device is operating in the stack should be implemented.

The side-accessible goods holder may comprise a detachable barrier.

The lifting device may be used to attach and detach the barrier. The barrier may be permanently attached to the lifting device or it may be attachable to the lifting device to move and attach it to the side-accessible goods holder. A set of barrier gripping structures may be arranged at an upper edge or rim of the barrier, i.e. at an edge or rim configured to be on the opposite side of the barrier relative to the base when the barrier is attached to the goods holder.

The side-accessible goods holder may comprise one detachable barrier for each side-access opening.

The goods holder may comprise a retractable barrier configured to move between an retaining position on the goods holder, in which it may be received by and covers the side-access opening, and a non-retaining position on the goods holder, in which it may be retracted away from the side-access opening, to enable user access to the storage area through the side-access opening.

The retaining position on the goods holder may be an operating position. The non-retaining position on the goods holder may be a retracted position.

The barrier may be arranged as an overhead sectional barrier designed with multiple panels or sections that are hinged together.

The side-accessible goods holder may comprise guides, which may be in the form of tracks or slots, arranged in the side edges of the side-access opening and along the top of the first and second side walls, and which are configured to receive the sides of the barrier. The barrier may thus be slid along the tracks or slots between the retaining and non-retaining positions.

When the barrier is operated to be retracted, it moves upward along the guides arranged on the sides of the side-access opening and then curves to move along the guides along the top of the first and second side walls, ultimately settling substantially parallel to the top face of the goods holder when fully open.

The barrier may be arranged as a roller panel where the panel is wound, preferably around a core, which core may be a cylindrical roller tube, preferably at the top of the side-access opening. The roller panel may be of a heavy-duty flexible fabric, such as canvas.

The barrier is configured to remain within the footprint of the side-accessible goods holder in the lateral plane when in the retaining position and when in the non-retaining position, i.e. it can be removed from the side-access opening without extending outside the footprint of the side-accessible goods holder. The lateral plane may be referred to as the X-Y-plane. The base of the goods holder may be arranged in a plane parallel to the lateral plane. The non-retaining position may be a position on the goods holder or a detached position above the goods holder. This is an advantage compared to for example goods holders comprising a hinged side wall that may be swung open to access the goods or a drawer-type goods holder where the drawer must be pulled out in order to access the goods. These solutions require the barrier to be moved outside the footprint of the goods holder for providing access to the goods inside. Therefore, the invention comprises a more compact solution, requiring less space in the lateral plane compared to prior art, which is useful when there is limited space and/or when space for customer access and product display and access is difficult or expensive to provide.

The goods holder may be provided with one or more divider walls to divide the storage area of the goods holder into compartments. When the goods holder comprises two side-access openings on two opposite sides of the goods holder, a divider wall may be arranged to provide a first compartment accessible from a first of the access openings, and a second compartment accessible from the second access opening.

When the goods holder is divided into compartments, each compartment may be provided with a side-access opening. One compartment may be closed (i.e. side-access opening covered by a barrier), while the other compartment is open (i.e. not covered by a barrier), or both may be closed or open at the same time.

The retractable barrier may comprise an activation interface configured for engagement with a cooperative activation element on the lifting device.

The activation interface may e.g. be a recess, or a protruding element configured for engaging with a cooperative activation element on the lifting device. The activation element may be configured for engaging with the activation interface and may for example be a pin for insertion in a recess or groove of the activation interface on the barrier. The activation element may alternatively be a clamping device for clamping on to a protruding element of the activation interface on the barrier. The lifting device may comprise a movable arm comprising the activation element, such that the activation element may engage with the activation interface of the barrier and move the barrier between the operating position and the retracted position by moving the arm.

The retractable barrier may thus be configured to be moved between the operating position and the retracted position by the lifting device.

The side-accessible goods holder should be designed so that the stacks of goods holders self-supporting. The goods holder may be made by a range of materials, for example plastic or metal, such as aluminum.

The present invention also relates to a system comprising:
- a side-accessible goods holder configured for being stacked in a stack of goods holders in a storage column of an automated storage and retrieval system and for being moved by a lifting device of the system, and
- a container handling device, the container handling device comprising a lifting device configured for lowering the side-accessible goods holders to or raising the side-accessible goods holders from a storage position in the storage column,
   wherein the goods holder comprises a base, a first side wall arranged on a first side of the goods holder, a second side wall arranged on a second side of the goods holder, the first and second side walls extending upwardly from the base and forming a storage area for storing product items therebetween,
- wherein the goods holder comprises a side-access opening allowing access into the storage area from a third side of the goods holder, and
- wherein the side-access opening is configured to receive a barrier for preventing the product items from falling out from the storage area through the side-access opening.

The side-access opening also allows product items to exit the storage area through the side-access opening when it is not covered by the barrier.

The side-accessible goods holder may be a goods holder according to any of the above paragraphs.

The container handling device may be configured to move goods holders within an automated storage and retrieval system.

The lifting device may comprise a first set of gripping elements for engaging with a corresponding first set of gripping structures on the side-accessible goods holder, and a barrier configured to cover the side-access opening of the side-accessible goods holder when the gripping elements are engaged with the gripping structures on the side-accessible goods holder.

The barrier may thus be arranged on the goods holder itself, it may be a separate part attachable to the goods holder, or it may be arranged on the lifting device for engaging with the side-access opening when the lifting device is handling the goods holder.

The lifting device may comprise a lifting frame. The barrier and the first set of gripping elements may be arranged on the lifting frame. The lifting frame may be suspended from a container handling device by lifting bands.

The lifting device may then lift and lower the side-accessible goods holder by connecting the lifting frame to the first set of gripping structures and lifting or lowering the lifting frame and the goods holder using the lifting bands.

The barrier may be retractably arranged on the lifting device, preferably pivotally arranged.

The barrier may be retractably arranged on the lifting frame of the lifting device.

The lifting device may comprise one barrier for each side-access opening on the side-accessible goods holder. Thus, when the side-accessible goods holder comprises two side-access openings, e.g. at opposite sides of the base, the lifting device comprises two barriers arranged to cover these openings when the lifting device is engaged with the goods holder. The barriers may thus be arranged at opposite sides of the lifting frame.

The lifting device may comprise a detachable adapter. The barrier and the first set of gripping elements may be arranged on the adapter.

The adapter may be attachable to a lower side of the lifting frame of the lifting device. The adapter may thus be an intermediary between the lifting frame and the side-accessible goods holder. The lifting device may be configured to move a goods holder with or without the adapter attached.

The lifting frame may comprise a second set of gripping elements and the adapter may comprise a second set of gripping structures configured to engage with the second set of gripping elements on the lifting frame.

When the side-accessible goods holder comprises two side-access openings, e.g. at opposite sides of the base, the adapter comprises two barriers arranged to cover these openings when the adapter is engaged with the goods holder. The barriers may thus be arranged at opposite sides of the adapter.

The present invention also relates to an automated storage and retrieval system comprising a system according to any of the above paragraphs, wherein the container handling device is configured to move within the automated storage and retrieval system.

The container handling device may be a container handling vehicle operable on the rail system.

The automated storage and retrieval system may comprise a user-accessible retail section and a first rail system arranged across the user-accessible retail section. The user-accessible retail section comprises a number of side-accessible storage columns, each side-accessible storage column formed by a set of upright members defining a storage volume therebetween for accommodating a stack of side-accessible goods holders, wherein each side-accessible storage column comprises an access side, and wherein the container handling device is operable on the rail system.

The side-accessible storage column may be identical to the storage columns described in relation to the framework structure of the prior art automated storage and retrieval system described in relation to Fig. 1, however, it should have an access side which is accessible to a person or a customer. Thus, the storage columns of Fig. 1 which are located at the periphery of the framework structure (or grid), i.e. the outer rows or storage columns, are side-accessible storage columns, while storage columns that are surrounded by other storage columns and thus not having a side which is accessible to a person are not considered to be side-accessible storage columns. The access side is thus a side of the side-accessible storage column accessible to a person.

The upright members forming the side-accessible storage column may be pillars or posts similar to the upright members shown in Fig. 1, or they may be walls.

The side-accessible storage column may be separated from the neighboring storage columns by a wall, for preventing access between to storage columns.

The side-accessible storage column may comprise four sides of which the first side may be the access side and the second side is opposite the first side and may also be an access side. The first side may also be referred to as a front of the side-accessible storage column and the second side may be referred to as the rear side. When the side-accessible goods holder is placed in the side-accessible storage column, it shall be placed with the side-access opening facing the access side of the storage column. The third and fourth sides of the side-accessible storage column are facing neighboring columns of the framework structure, which may be other storage columns or special purpose columns. The third and fourth sides may be provided with a wall for preventing access between to storage columns.

The user-accessible retail section may comprise a first framework structure which may be identical to the framework structure described in relation to the system of Fig. 1.

The first rail system may be a two-dimensional rail system identical to the rail system described in relation to the system of Fig. 1.

The first rail system may comprise a first set of parallel rails and a second set of parallel rails arranged perpendicular to the first set of rails, the first and second sets of parallel rails dividing the rail system into rows of access openings.

The first rail system may be arranged across the top of the user-accessible retail section, i.e. across the top of the first framework structure.

The first set of parallel rails may be arranged to guide movement of a container handling vehicle in a first direction X across the top of the framework structure.

The second set of parallel rails may be arranged to guide movement of the container handling vehicle in a second direction Y across the top of the framework structure that is perpendicular to the first direction.

The access openings may be aligned with the side-accessible storage columns to allow the container handling vehicle to lift and lower a goods holder, which may be a side-accessible goods holder, between a position above the first rail system and a position below the first rail system. The position below the rail system may be a position in a side-accessible storage column. The container handling vehicle may be operated to transport the side-accessible goods holder(s) on the rail system.

The storage columns may each be arranged below an access opening of the rail system.

The lifting device may be a vertically displaceable lifting device for being suspended from the container handling vehicle, said lifting device being configured for lowering the side-accessible goods holders to or raising the side-accessible goods holders from a storage position of a storage column. The container handling device may move the side-accessible goods holder along the rails of the first rail system.

Thus, the container handling vehicle comprises a lifting device for vertical transportation of goods holders, e.g. raising a goods holder from, and lowering a goods holder into, a storage column.

The lifting device may be suspended from the container handling vehicle by lifting bands.

The first set of gripping elements are configured for engaging the first and second side walls of the side-accessible goods holder.

The lifting device may be lowered from the vehicle so that the position of the first set of gripping elements with respect to the vehicle can be adjusted in a direction Z which is orthogonal the plane of the rails system.

The barrier may be complementary shaped to the opening in a sidewall of the goods holder.

The lifting device may comprise a lifting frame. The first set of gripping elements may be arranged on the lifting frame.

The first set of gripping elements may comprise one or more gripping elements protruding downwards from a lower face of the lifting frame.

The first set of gripping elements is for releasable connection to a side-accessible goods holder.

The lifting frame may comprise a second set of gripping elements for releasable connection to a device provided with corresponding second set of gripping structures. This device may be e.g. a barrier, a goods holder or an adapter.

The barrier may be in an operating position and in a retracted position on the lifting device. In the operating position, it covers the side-access opening when the lifting device is coupled to the side-accessible goods holder. It may engage the side-access opening, e.g. be inserted into slots of the access opening, of the side-accessible goods holder. In the retracted position, it does not cover the side-access opening or engage with the side-access opening. Preferably, when in the retracted position, the barrier is located within the vertical projection of the lifting frame, and such that it does not extend out to or interfere with the first and/or second set of gripping elements, in order to not hinder engagement of the first and/or second gripping elements with the connecting structure. The lifting device may thus be used to operate on normal goods holders with four side walls using the second set of gripping elements while the barrier in the retracted position.

The adapter may comprise an adapter frame. The adapter frame may correspond in size and shape to the lifting frame. The barrier and the first set of gripping elements may be arranged and extend downwards from a lower face of the adapter frame.

The adapter may comprise a set of adapter gripping structures which may be equal to the gripping structures of the first set of gripping structures on the side-accessible goods holder. The second set of gripping elements on the lifting frame may be coupled with the adapter gripping structures or with a set of gripping structures on another structure, such as goods holder having a set of gripping structures at an upper rim of the third and fourth side walls.

Thus, the lifting device may, when not coupled with the adapter, be used to operate on goods holders with four side walls using the second set of gripping elements.

The adapter gripping structures may be arranged on the adapter frame, and may be engageable from a top face of the adapter frame.

At least some of the side-accessible storage columns may be provided with a side-access barrier configured to be moved between a closed position and an open position, wherein when in the closed position, the side-access barrier prevents access to the stack of goods holders from a side of the storage column and wherein when in the open position, the side-access barrier allows access to the stack of goods holders.

The side-access barrier is arranged at the access side of the side-accessible storage column.

The side-access barrier may be a door. The door may be hinged and may be swung open from the closed position to allow access to the column. The door may be slidingly engaged with the storage column and may be slid between open and closed position. The door may be transparent to provide visibility of the content in the side-accessible goods holders in the stack. The door may extend over only some of the storage positions of a storage column, e.g. it may extend only partway up from the base on which the framework structure is standing (e.g. the floor), or it may extend over the entire storage column.

The system may comprise various types of storage columns. Some storage columns may be full length, i.e. extending across the full height of the framework structure from the base and up to the rails. Some storage columns may be shorter length and extend for example only partway down from the rails, not extending all the way to the base. Some of the storage columns may be side-accessible storage columns which are arranged in the framework structure to allow access from a side of the storage column, e.g. by having a free side of the storage column. The side-accessible storage columns may extend partway up from the bottom of the base on which the framework structure is standing as there is typically a maximum height that customers may reach. The space above the side-accessible storage column and up to the rails may be used either for storing goods holders or may be void for fast access to the goods holders in the side-accessible storage column for the container handling vehicles.

The side-access barrier may be lockable to restrict access to the storage column under certain circumstances, e.g. while a container handling vehicle is operating inside the storage column. A manual locking mechanism for the door may be provided for being locked and unlocked only by approved personnel. The side-access barrier may thus comprise a lock.

Furthermore, the lifting device may be restricted from operating inside the side-accessible storage columns during opening hours of the shop, i.e. replenishment only outside of opening hours.

When a customer is standing in front of a side-accessible storage column with a stack comprising side-accessible goods holders, the items inside the side-accessible goods holders are preferably visible to the customer while the door is closed. In order to pick the items desired, the customer may open the door and pick items from one or more of the side-accessible goods holders in that column.

The automated storage and retrieval system may comprise a user access area between two rows of storage columns.

The user-accessible retail section may thus comprise at least one row of column voids defined by a space between two rows of storage columns, which row of column voids forms the user access area.

The row of column voids provides an aisle for the customers in the access section to move between the side-accessible storage columns holding side-accessible goods holders. The row of column voids may be arranged below one or more rows of access openings.

Preferably, a row of column voids is provided below two adjacent rows of access openings.

Alternatively, below every other row of access openings is a row of column voids while below the rest of the access openings are storage columns for storing goods holders, such as side-accessible goods holders.

The column voids may extend from the bottom of the framework structure and at least partway up towards the overlying rails, for example all the way up to the rails. The voids may thus provide the necessary height of the aisle for people to walk around.

When the column void extends only partway up from the bottom of the framework structure, the space above the void and up to the rail system may efficiently be used as a storage column for storing goods holders. These storage columns thus have a length which is shorter than the full height of the first framework structure. Some of the upright members may therefore extend from the base upon where the framework structure is placed and up to the rails for providing full length storage columns, while some of the upright members may extend only partway down from the rails for providing the shorter length storage columns above the column voids.

Thus, below each access opening of the first framework structure is a column space within the footprint of the access opening, and this column space may be used for a storage column, a side-accessible storage column, a void column, or a combination of at least two of these. Some column spaces of the first framework structure may for example comprise a column void directly above the floor, and a storage column above the column void. Some column spaces of the first framework structure may for example comprise a side-accessible storage column directly above the floor and a void or a storage column above the side-accessible storage column.

The user-accessible retail section may be connected to a storage section, the storage section being provided with a second rail system connected to the first rail system for allowing transport of the side-accessible goods holder from the storage section to the user-accessible retail section on the first and second rail systems.

The container handling device may be configured to move side-accessible goods holders from the storage section to the user-accessible retail section and preferably also from the user-accessible retail section to the storage section.

Other transportation devices operable on the rail system, such as transfer vehicles without a lifting device, may be used to move the side-accessible goods holders from the storage section to the user-accessible retail section (and vice versa). A container handling device with a lifting device may then be used to lower the side-accessible goods holder into the side-accessible storage column.

The second rail system may be principally equal to the first rail system, i.e. having the same features as the first rail system, but that may be arranged over a larger or smaller area and is overlying the storage section.

The user-accessible retail section may thus be linked to the storage section by rails for passage of a container handling vehicle.

The storage section may comprise a second framework structure similar to that of Fig.1. The second framework structure of the storage section preferably comprises full length storage columns for storing goods holders. The first and second rail systems may be connected by rails allowing the container handling vehicles to drive on said rails between the storage section and the user-accessible retail section.

The storage section may for example be placed next to the user-accessible retail section, or in a different room of a warehouse building. The second rail system of the storage section should be arranged at the same height above the floor as the first rail system of the user-accessible retail section so that the first and second rail systems may be connected by rails.

A container handling vehicle may thus pick up a side-accessible goods holder in a storage column of the storage section and transport it to the user-accessible retail section, while driving on the overlying rails, where it may place the side-accessible goods holder in a side-accessible storage column. The barrier(s) may then be removed to allow customers to pick items from the side-accessible goods holder. The container handling vehicle may of course transport a goods holder the opposite way, from the user-accessible retail section to the storage section.

In some embodiments, the automated storage and retrieval systems comprises a storage section arranged above the user-accessible retail section and the first rail system is arranged across the top of the storage section, in a similar manner as the rail system of Fig. 1. The storage columns of the storage system are then aligned with the underlying storage columns of the retail section, and aligned with the access openings of the rail system.

The invention is particularly useful in a retail establishment where an automated storage and retrieval system is used to store goods, to present goods and make them accessible to customers and for automatic replenishment. The invention is also suitable for use in vertical farming where the produce may be stored in the side-accessible goods holders.

In the present specification the term "goods holder" is intended to mean any goods or product or product item holder unit having a bottom plate and side portions suitable for releasable connection to a container lift device, e.g. a storage container, a bin, a tote, a tray or similar. The side portions may preferably comprise gripping recesses. The side portions are preferably sidewalls. The height of the sidewalls may vary depending on the intended use of the automated storage and retrieval system and the goods, products or product items to be stored. The gripping recesses may be arranged at an upper rim of the sidewalls. The outer horizontal periphery of the goods holder is preferably rectangular.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5a is a perspective, exploded view of a side-accessible goods holder according to an embodiment of the invention comprising a first and a second side-access opening and comprising a first and a second detachable barrier.
Fig. 5b is a perspective view of the goods holder of Fig. 5a where the barriers are attached to and covering the side-access openings of the goods holder.
Fig. 6a is a perspective view of a side-accessible goods holder according to an embodiment of the invention comprising a first and a second side-access opening and a first and a second retractable barrier.
Fig. 6b is a perspective view of the goods holder of Fig. 6a where the first and second barrier has been moved to a different position compared to in Fig. 6a.
Fig. 7 is a perspective view of a side-accessible goods holder according to another embodiment of the invention comprising a first and a second side-access opening and a first and a second retractable barrier.
Fig. 8 is a perspective view of an embodiment of a side-accessible goods holder comprising a first and a second side-access opening and a lifting device arranged above the side-accessible goods holder, the lifting device comprising a first and a second barrier for covering the first and a second side-access opening, respectively.
Fig. 9 is a perspective view of an embodiment of a lifting device comprising a first and a second retractable barrier, wherein the barriers are pivoted in below the lifting frame of the lifting device and thus not visible on the figure.
Fig. 10a is a perspective view of an embodiment of a lifting device comprising a detachable adapter, the adapter comprising a first and a second barrier, wherein the adapter is shown in the detached state.
Fig. 10b is a perspective view of the lifting device of Fig. 10a with the adapter attached and wherein the lifting device is positioned above a side-accessible goods holder, the side-accessible goods holder comprising a first and a second side-access opening.
Fig. 10c is a perspective view of the lifting device and goods holder of Fig. 10b wherein the lifting device is lowered all the way to the goods holder so that the first and second barriers covers the first and second side-access openings, respectively.
Fig. 10d is a side view of Fig. 10c.
Fig. 11 is a perspective view of an embodiment of an automated storage and retrieval system comprising a storage section and a user-accessible retail section.
Fig. 12 is a perspective view of another embodiment of an automated storage and retrieval system comprising a user-accessible retail section with storage above.

### DETAILED DESCRIPTION OF THE INVENTION

In overview, the approaches described herein relate to a side-accessible goods holder having a storage area for storing product items and a side-access opening, the holder being interactable with a moving device such as a lifting device, to close the side-access opening while the moving device is moving, for example when lifting the goods holder, and open the side-access opening when the goods holder is at an access position. The interaction may comprise, for example, attaching and detaching and reattaching a closure such as a barrier or panel or side wall by the moving device to provide the open and closed configurations, extending or retracting of a closure incorporated in the goods holder by cooperation with the lifting device, activation by the moving device of a closure incorporated in the goods holder comprising a roller barrier wound around a core to extend or retract between the open and closed configurations, or lifting or lowering closures comprising barriers connected to or forming part of the moving device. By virtue of such an arrangement, goods holders holding product items may be moved by the moving device from a storage position in a storage section to an access position such as a user accessible position in, for example, a retail section, in such a manner that the goods holder is in a closed configuration by closing the side-access opening during movement and in an open configuration by opening the side-access opening when placed at the access position, by simple interaction with the moving device.

In the following, embodiments of the invention will be discussed in more detail with reference to the appended drawings. It should be understood, however, that the drawings are not intended to limit the invention to the subject-matter depicted in the drawings.

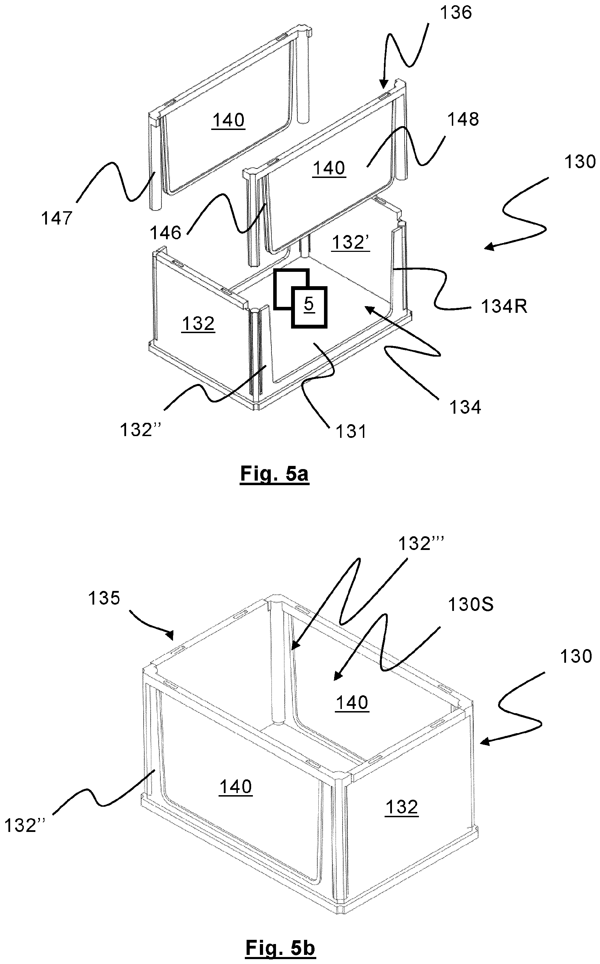

Embodiments of the invention will now be discussed in more detail with reference to Figs 5-12.

Fig. 5a is a perspective, exploded view of a side-accessible goods holder 130 according to an embodiment of the invention comprising a first and a second side-access opening 134 and comprising a first and a second detachable barrier 140.

Fig. 5b is a perspective view of the goods holder of Fig. 5a where the barriers 140 are attached to and covering the side-access openings 134 of the goods holder 130.

The goods holder 130 comprises a rectangular base 131, a first side wall 132 arranged on a first side of the goods holder 130, a second side wall 132' arranged on a second, opposite side of the goods holder 130, a third side wall 132" on a third side of the goods holder 130, and a fourth side wall 132‴ on a fourth side of the goods holder, the fourth side being opposite the third side. The side walls 132, 132', 132", 132‴ are arranged at the periphery of the base 131. The first and second side walls are arranged on the short side edges of the base 131 and extends vertically upwards from the base 131. The third and fourth side walls 132", 132‴ are arranged on the long side edges of the base 131 and extends vertically upwards from the base 131. Thus, a storage area 130S (see Fig. 5b) is formed between the side walls 132, 132', 132", 132‴. The goods holder 130 comprises a first and a second side-access opening 134 in the third and fourth side walls 132", 132‴ of the goods holder 130, above the long side edges of the base 131. These side-access openings 134 are formed by a cut-out or recess in the side walls 132", 132‴ so that the side walls comprise only a small wall section at the bottom above the base, and a small section at each side of the opening 134 extending between the base and the top of the goods holder 130. The goods holder 130 comprises an open top.

The side-accessible goods holder 130 is to be used for storing product items 5 and for presenting the product items 5 to users, such as to customer in a retail establishment. The product items 5 may be placed on the base 131. The side-accessible goods holder 130 may be used in an automated storage and retrieval system 2, similar or identical to the one described in relation to Fig. 1. Thus, it may be transported within the system 2 by a container handling vehicle 201, 301, 401 operable on an overlying rail system 8, 108 and may be placed in a storage column 10, 105 of the system 1. The goods holder 130 is stackable with other side-accessible goods holders 130 and may also be stackable with other goods holders, such as the storage containers 106 of the prior art automated storage and retrieval system of Fig. 1. Thus, the base 131 comprises a stacking interface which allows it to be stably placed on top of another side-accessible goods holder 130, e.g. on top of the side walls 132, 132', 132", 132‴.

The side-accessible goods holder 130 comprises a first set of gripping structures 135 for allowing a lifting device 600 to grip and hold the side-accessible goods holder 130 so that the lifting device 600 may vertically move the goods holder 130, e.g. lowering or raising the goods holder 130 within a storage column 10, 105. The first set of gripping structures 135 are in the form of two recesses or slots in an upper rim of each of the first and second side walls 132, 132'. The lifting device 600 may comprise a first set of gripping elements 605 configured to engage the first set of gripping structures 135. The lifting device 600 may be a part of a container handling device, such as container handling vehicle 201, 301, 401 or a gantry crane 701.

The side-accessible goods holder 130 of Fig. 5a and 5b comprises a first and a second detachable barrier 140. The barriers 140 may be attached to the side-accessible goods holder 130 so that it covers the side-access opening 134, i.e. closing the opening to ensure that the product items 5 stored within the storage area 130S do not fall out when the side-accessible goods holder 130 is being moved, e.g. lowered or raised, by the lifting device 600. When the barriers 140 are detached and not covering the side-access openings 134, access into the storage area 130S from the third and fourth side of the side-accessible goods holder 130 is possible. The first and second barriers 140 may be detached and attached independently of each other, to allow access into the storage area 130S only from the third or the fourth side of the side-accessible goods holder 130.

The first and second detachable barriers 140 each comprises a panel 148 configured to cover the first and second side-access openings 134. The first and second detachable barriers 140 are each provided with a set of barrier gripping structures 136 which may be used to grip and hold the barrier 140 by a lifting device 600, so that the first and/or second barrier 140 may be detached from the side-accessible goods holder 130 by using the lifting device 600. The barrier gripping structures 136 may be in the form of two recesses or slots in an upper rim of each of the first and second barrier 140.The barrier gripping structures 136 may be identical to the gripping structures of the first set of gripping structures 135. The lifting device 600 may comprise a second set of gripping elements 606 configured to engage the barrier gripping structures 136. The gripping elements of the second set of gripping elements 606 may be identical to the ones of the first set of gripping elements 605.

The side-access openings 134 each comprises an interface configured for engaging a complementary interface on each of the first and second barrier 140. The periphery or outer boundary of the side-access opening 134 comprises a rim 134R. The periphery or outer boundary of the panel of the first and second barriers 140 may comprise a slot 146 for slidingly engaging with the rim 134R. Thus, the first and second barriers 140 may be slid down onto the rim 134R from above to cover the side-access opening 134. Each of the first and second barriers 140 comprises two guide posts 147 which may be used to align the barrier 140 with the side-access opening 134 and which may also provide improved connection between the barrier 140 and the goods holder 130.

The panel 148 may be complementary shaped to the side-access opening 134. The panel 148 may have the same or a larger size than the side-access opening 134.

The panel 148 may in another embodiment not be slidingly engaged with the side-access opening 134, but may be configured to lie against the periphery or outer boundary of the side-access opening 134 so that the opening is closed. The panel is then held against the side-access opening 134 e.g. by the posts 147 engaging a guide on the side-accessible goods holder 130.

In another embodiment similar to that of Fig. 5a and Fig. 5b, the side-accessible goods holder 130 comprises only one side-access opening, e.g. in the third side of the goods holder 130, and only one detachable barrier 140 is needed.

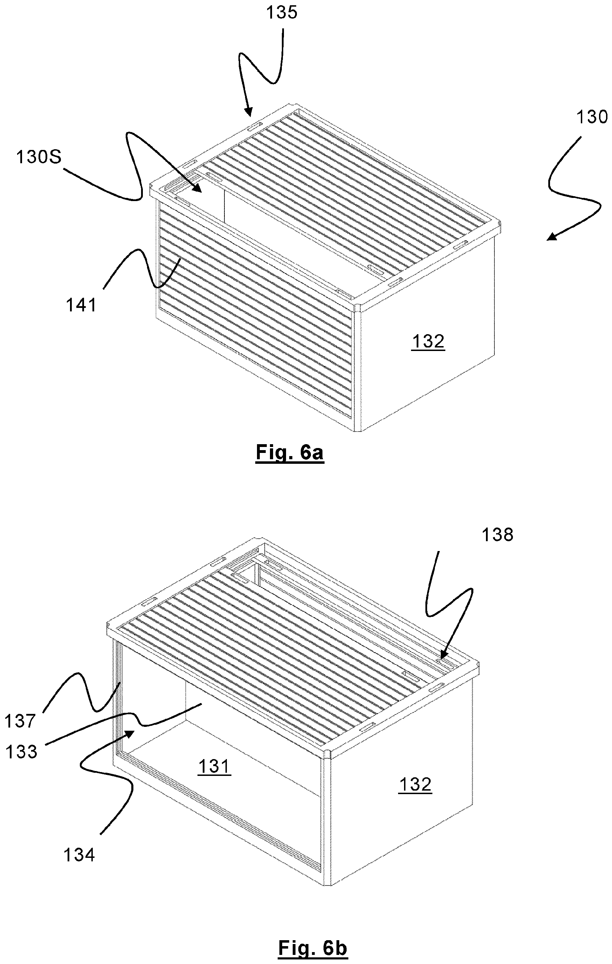

Fig. 6a and Fig. 6b are shows a side-accessible goods holder 130 according to another embodiment of the invention comprising a first and a second side-access opening 134 and a first and a second retractable barrier 141.

The side-accessible goods holder 130 of Fig. 6a and Fig. 6b is similar to the embodiment shown in Fig. 5a and Fig. 5b in terms of its purpose and in terms of the base 131, first and second side walls 132, 132', storage area 130S, and gripping interface 135, however, it comprises a first and a second retractable barrier 141 to cover the first and second side-access openings 134 instead of detachable barriers 140. Also, the side-access openings 134 extends all the way to the first and second side walls 132, 132' and almost all the way down to the base 131. In another embodiment, the side-access opening 134 is smaller, and the third and fourth sides of the goods holder 130 comprises at least a section of a side wall 132", 132‴ along the vertical sides of the opening 134, similar to the embodiment of Fig. 5a.

The barriers 141 may be moved on the side-accessible goods holder 130 between a retaining position and a non-retaining position. When in the retaining position, it covers the side-access opening 134, i.e. closes the opening 134 to ensure that the product items 5 stored within the storage area 130S do not fall out when the side-accessible goods holder 130 is being moved, e.g. lowered or raised, by the lifting device 600. When the barrier 141 is moved to the non-retaining position, i.e. moved away (retracted) and not covering the side-access openings 134, access into the storage area 130S from the third and fourth side of the side-accessible goods holder 130 is possible. The first and second barriers 141 may be moved (extended and retracted) independently of each other, to allow access into the storage area 130S only from the third or the fourth side of the side-accessible goods holder 130.

The barriers 141 comprises an inner face facing the storage area 130S, and an opposite outer face, facing the environment outside the goods holder 130. Each of the barriers 141 comprises an activation interface 138 in the form of recess or slots arranged on the outer face of the barrier 141. The lifting device 600 used to vertically move the goods holder 130 may comprise a movable arm comprising a cooperative activation element, such as a protruding pin for engaging with the recess 138 on the barrier 141 and move the barrier 141 between the retaining position, where it closes the side-access opening 134, and the non-retaining position (retracted position), where it does not close the side-access opening 134. Alternatively, the activation interface 138 is in the form of a protruding pin or element, and the activation element on the lifting device 600 is in the form of a clamping element.

In Fig. 6a, the first barrier 141 (shown in front of the goods holder) is shown in retaining position and the second barrier 141 (rear side of goods holder) is shown in non-retaining position. In Fig. 6b, the first barrier 141 (shown in front of the goods holder) is shown in non-retaining position and the second barrier 141 (rear side of goods holder) is shown in retaining position. The barrier 141 is moved along tracks or guides 137a, formed by slots, arranged at the vertical sides of the side-access opening 134, so that the barrier 141 may slide up and down over the third or fourth side of the goods holder 130, and tracks or guides 137b arranged along the horizontal sides of the top opening of the goods holder, so that the section of the barrier 141 which is moved away from the side of the goods holder 130 may be arranged over the top of the goods holder 130. This way, the barrier 141 is not blocking another goods holders 130 or storage container 106 from being stacked on top of it, and it does not extend out of the footprint of the goods holder 130 even when it is not covering the side-access opening 134.

The barriers 141 are made as overhead sectional barriers comprising multiple panels or sections that are hinged together to allow the barrier 141 to curve from covering the side of the goods holder 130 to covering the top of the goods holder 130. In another embodiment, the barrier 141 is made of a flexible material allowing it to curve from covering the side of the goods holder 130 to covering the top of the goods holder 130.

In Fig. 6a and Fig. 6b it is also shown a divider wall 133 which divides the storage area 130S into a first and a second compartment, and where the first side-access opening 134 may provide access to the first compartment, and the second side-access 134 opening may provide access to the second compartment.

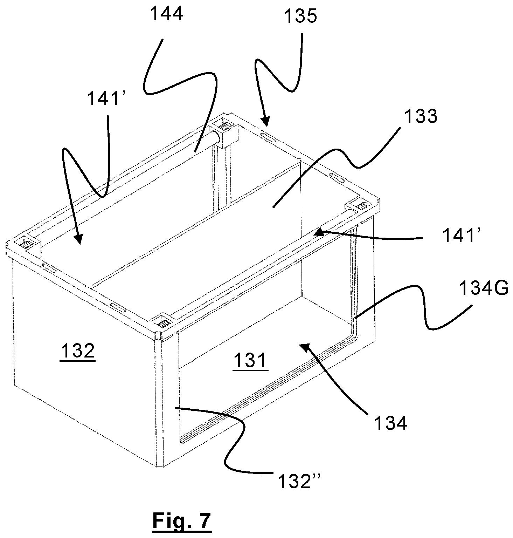

Fig. 7 is a perspective view of a side-accessible goods holder 130 according to another embodiment of the invention comprising a first and a second side-access opening 134 and a first and a second retractable barrier 141'.

The side-accessible goods holder 130 of Fig. 7 is similar to the embodiment shown in Fig. 6a and Fig. 6b in terms of its purpose and in terms of the base 131, first and second side walls 132, 132', storage area 130S, gripping interface 135, and having retractable barriers 141', however, the design of the retractable barriers 141' are different to the embodiment of Fig. 6a and 6b in that the barrier is wound up when retracted, instead of slidingly retracted. Also, the side-access openings 134 comprises at least a section of a side wall 132", 132‴, similar to the embodiment of Fig. 5a.

In Fig. 7, the first barrier 141' (located on front side of the goods holder as it is shown in the figure) is shown in a non-retaining position, i.e. not covering the first side-access opening 134, and the second barrier 141' (rear side of goods holder) is shown in retaining position, i.e. covering the second side-access opening 134.

The barriers 141' are made of a heavy-duty flexible material, such as a canvas, allowing it to be wound around a cylindrical core 144 arranged at the top of each of the side-access openings 134. When extended (unwound) to cover the side-access opening 134, the sides of the barrier 141' are guided by guides or tracks along the vertical sides of the side-access opening 134.

The periphery or outer boundary of the side-access opening 134 comprises a guide 134G in the form of a slot, for guiding the edge of the barrier 141'. The barrier 141' may comprise an edge or rim for slidingly engaging with the slot 134S. Thus, the first and second barriers 141' may be slid down along the guide 134G from above to cover the side-access opening 134.

In another embodiment similar to that of Fig. 7, the side-accessible goods holder 130 comprises only one side-access opening 134, e.g. in the third side of the goods holder 130, and only one retractable barrier 141' is needed.

The cylindrical core may be driven by a motor to wind or unwind the barrier 141' so that the barrier 141' can move between the retaining and the non-retaining positions. The motor may be arranged on the goods holder 130, e.g. directly coupled to the core, or on the lifting device 600. Driving power may be transferred from the motor on the lifting device to the cylindrical core e.g. by a mechanical drive mechanism or it may be magnetic.

The lifting device 600 may be used to initiate or trigger the motor.

Alternatively, the first set of gripping structures 135 may be configured such that when the first set of gripping elements 605 of the lifting device 600 engages the gripping structures 135 for lifting the goods holder 130, the motor automatically unwinds the barrier 141' to move it to retaining position, and when the first set of gripping elements 605 of the lifting device 600 disengages the gripping structures 135 for leaving the goods holder 130 e.g. after it has been placed in the stack 107, the motor automatically winds up the barrier 141' to move it to the non-retaining position and provide access to the storage area 130S from the side of the goods holder 130.

Alternatively, or in addition, the cylindrical core may be spring-loaded to automatically wind (and retract) the barrier 141'. The lifting device may be used to release tension in the spring, e.g. by activating a switch.

Since the barrier 141' and the cylindrical core 144 are arranged within the goods holder 130, it may be used in a stack 107 and the barrier 141' does not extend outside the footprint of the goods holder 130 even when it is not covering the side-access opening 134.

The goods holder 130 of Fig. 7 also comprises a divider wall 133 similar to that of Fig. 6a and Fig. 6b.

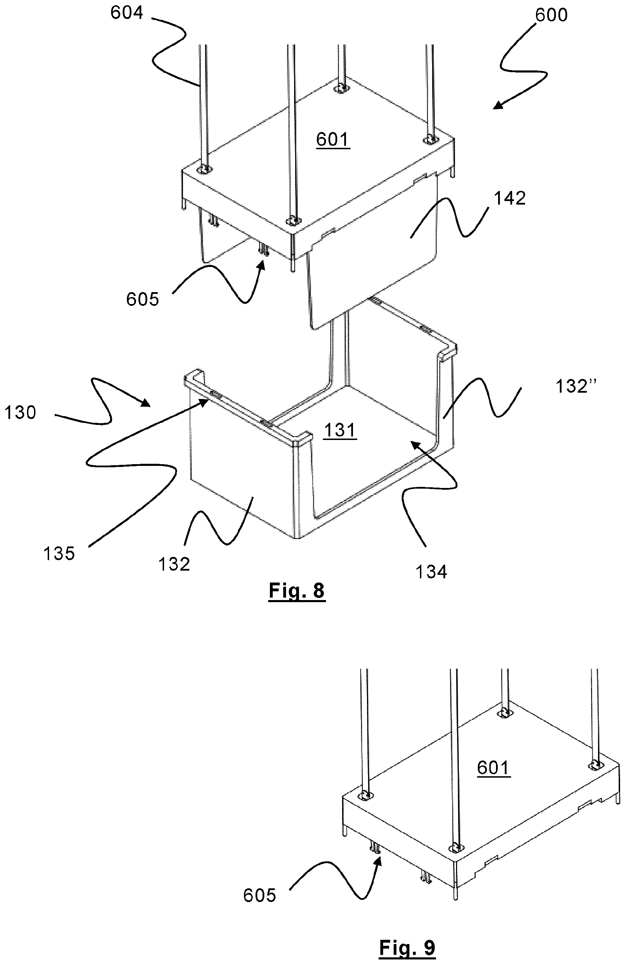

Fig. 8 is a perspective view of an embodiment of a side-accessible goods holder 130 comprising a first and a second side-access opening 134 and a lifting device 600 arranged above the side-accessible goods holder 130, the lifting device 600 comprising a first and a second barrier 142 for covering the first and a second side-access opening 134, respectively.

The side-accessible goods holder 130 of Fig. 8 is similar to the embodiment shown in Fig. 5a and Fig. 5b in terms of its purpose and in terms of the base 131, the side walls 132, 132', 132", 132‴, storage area 130S, first and second side-access openings 134 and gripping interface 135, however, it does not comprise a barrier arranged on the goods holder 130 itself. Instead, the side-access openings 134 may be closed by a barrier 142 arranged on the lifting device 600.

The lifting device 600 comprises a lifting frame 601 which is suspended from a container handling device, such as a container handling vehicle 202, 301, 401 by lifting bands 604. The frame 601 has a size and shape which corresponds more or less to the size and shape of the goods holder 130. On a bottom face of the lifting frame 601, a set of first gripping elements 605 are provided. The first set of gripping elements 605 comrpises two gripping elements at each of the short sides of the frame 601. These gripping elements 605 are configured for engaging the first set of gripping structures 135 of the goods holder 130. On the sides of the frame 601 which will be above the side-access openings 134 when the lifting device 600 is connected to the goods holder 130, a barrier 142 is provided. The barriers 142 are arranged on the lifting frame 601 such that when the first set of gripping elements 605 are engaged with the first set of gripping structures 135, the barriers 142 covers the side-access openings 134 so that product items 5 stores in the storage area 130S are prevented exiting through the side-access opening 134. As long as the lifting device 600 is lifted up off the goods holder 130 so that the barriers 140 are above the goods holder 130, access into the storage area 130S through the side-access opening 134 is possible.

The barriers 142 are pivotally attached at their upper edge to the bottom of the lifting frame 601 so that they can be moved between an operating position (extended), in which it may engage with and cover the side-access opening 134 by lowering the lifting frame 601 down to the goods holder 130, and a retracted position, in which it may not cover or engage with the side-access opening 134. In the retracted position, the barriers 140 are pivoted (retracted) in under the bottom of the lifting frame 601. Fig. 9 shows the lifting frame of Fig. 8 where the barriers 142 are pivoted in under the lifting frame and therefore not visible. This makes it possible to use the same lifting frame 601 for lifting other goods holders or storage containers 106 comprising four side walls and having gripping structures 135, i.e. goods holders or storage containers without side-access openings 134, since the barriers 142 are not blocking the lifting device 600 from connecting to such a goods holder or storage container using the first set of gripping elements 605 or other gripping or coupling devices.

The side-access openings 134 may comprise guides, slots or tracks 134G for receiving a rim or edge of the barrier 142. However, this is not essential because the barrier 142, when in the operating position (extended), will remain in its retaining position for as long as the first set of gripping elements 605 of the lifting device are engaged with the first set of gripping structures 135 of the goods holder 130.

When the goods holder 130 of Fig. 8 is to be picked up and moved to present the product items 5 stored inside to a customer, the lifting device 600 may be lowered towards the goods holder 130 having the barriers 140 in operating position, i.e. extending vertically downwards below the lifting frame 601. When the first set of gripping elements 605 engages the first set of gripping structures 135 of the goods holder 130, the barriers 142 will have moved all the way down to cover the entire side-access opening 134. The lifting device 600 may now lift the goods holder 130 and transport it to the target storage column 105, where it may lower the goods holder 130 and place it e.g. on top of the stack 107. Since the side-access openings 134 are covered by the barriers 142 during transport and during lifting and lowering, the product items 5 are secured inside the goods holder 130. When the lifting device 600 disengages the goods holder 130 and is moved up and away from the goods holder 130 from the stack 107, the side-access openings 134 allows the customers to access and pick items 5 from the goods holder 130.

In another embodiment, the barriers 142 are not pivotally attached to the lifting frame 601 but are rigidly attached in operating position. In this position, the barriers 142 are arranged to extend vertically downwards from the lifting device.

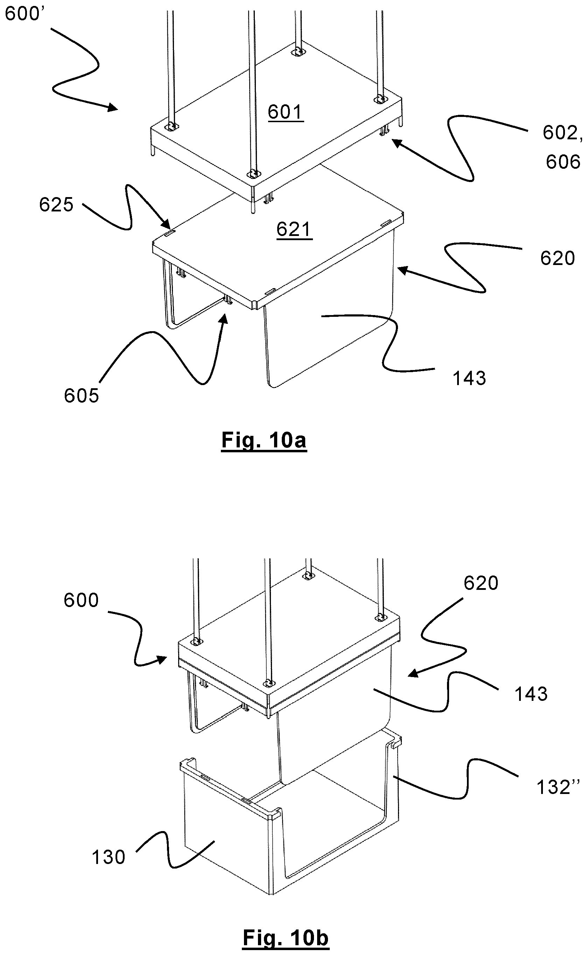

Fig. 10a is a perspective view of an embodiment of a lifting device 600' comprising a detachable adapter 620, the adapter 620 comprising a first and a second barrier 143, wherein the adapter 620 is shown in the detached state. In Fig. 10b the lifting device 600' of Fig. 10a is shown with the adapter 620 attached and positioned above a side-accessible goods holder 130 comprising a first and a second side-access opening 134. The adapter 620 comprises a first set of gripping elements 605, similar to those of the lifting device 600 of Fig. 8 and Fig. 9.

The lifting frame 601 comprises a set of adapter gripping elements 602 for engaging a set of adapter gripping structures 625 on an upper face of the adapter 620, so that the adapter may be attached to the lifting frame 601. The gripping elements may be arranged on a lower face of the lifting frame 601. There may be four adapter gripping elements in the set 602, two gripping elements arranged at each of the long sides of the frame 601, and they may be identical to the gripping elements of the first set 605 or the second set 606.

The set of adapter gripping structures 625 on the adapter 620 may comprise four structures and may be identical to the gripping structures of the first set of gripping structures 135 on the goods holder 130.

When the adapter 620 is attached to the lifting device 600' by engaging the set of adapter gripping elements 602 with the set of adapter gripping structures 625, it is similar to the lifting device 600 of Fig. 8 and 9 and works in the same manner. The adapter 620 may be designed to fit existing lifting devices of prior art automated storage and retrieval systems such as the lifting devices of the container handling vehicles 201, 301, 401. When the adapter 620 is detached, the lifting device 600' may be used to move goods holders or storage containers without side-access openings 134, such as a storage container 106 with four side walls. When a side-accessible goods holder 130 is to be moved, the adapter 620 may be attached to the underside of the lifting frame 601', and the lifting device 600' may be used in the same way as described for the lifting device 600 of Fig. 8 and Fig. 9.

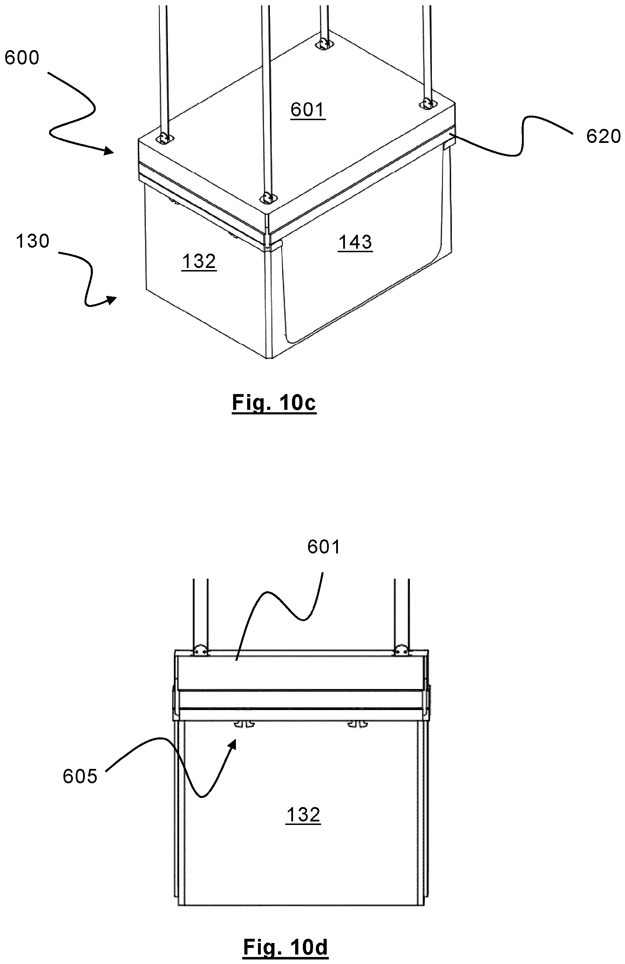

Fig. 10c shows the lifting device 600' lowered all the way to the goods holder 130 so that the first and second barriers 143 covers the first and second side-access openings 134, respectively. The first set of gripping elements 605 are engaged with the first set of gripping structures 135, which is more easily seen in the side view shown in Fig. 10d.

The side-accessible goods holder 130 is particularly useful in an automated storage and retrieval system 2, similar to that described in relation to Fig. 1 for presentation of goods and for automatic replenishment of goods in a retail establishment, such as a shop where customers walk along aisles in the shop and may see all the goods available and may pick the desired items directly from the side-accessible goods holders 130.

In all the embodiments, two side-access openings 134 are provided for the goods holder 130, and thus two barriers 140, 141, 141', 142, 143 are needed. In some embodiments, the goods holder 130 may comprise only one side-access opening 134, in which only one barrier 140, 141, 141', 142, 143 is provided.

In all the embodiments, the barrier 140, 141, 141', 142, 143 should have a size that is equal to or larger than the size of the side-access opening 134 to ensure that the side-access opening 134 is closed by the barrier.

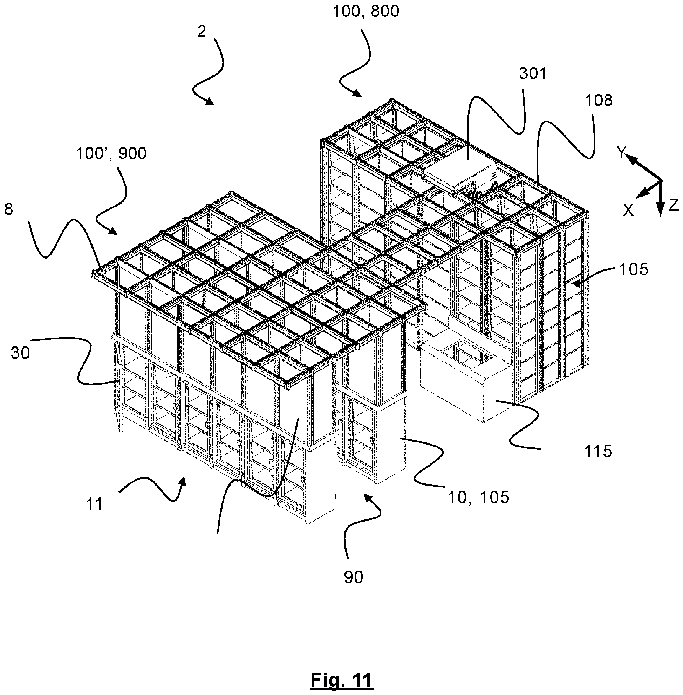

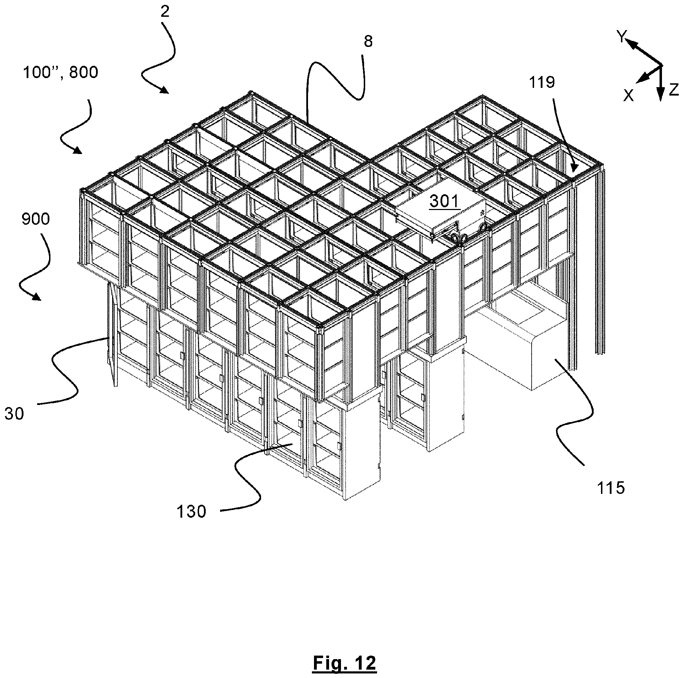

Fig. 11 and Fig. 12 shows two different embodiments of an automated storage and retrieval system 2 with a storage section 800 and a user-accessible retail section 900.

The user-accessible retail section 900 is for presenting product items 5 to users or customers and allowing them to pick product items directly from side-accessible goods holders 130. This section may thus comprise user-access areas 90, or aisles, where the customers may walk and have access to the goods holders 130 inside side-accessible storage columns 10. Above the side-accessible storage columns 10 is a rail system 8, on which a container handling vehicle 301 is operable. The retail section 900 may comprise special purpose columns, such as a transfer column.

The storage section 800 is used to store product items 5 in side-accessible goods holders 130, which goods holders 130 may be transported to the user-accessible retail section 900 by container handling devices 7. Since the goods holders, when stored in the storage section 800, are only to be accessed by container handling devices 7, the storage columns 105 may be arranged compactly, without the need for user access areas 90 between storage columns 105. Above the storage columns 105 in the storage section 800 is a rail system 8, 108, on which a container handling vehicle 301 is operable. The storage section 800 may comprise special purpose columns, such as a transfer column.

In Fig. 11 the storage section 800 and the user-accessible retail section 900 are located at different areas, e.g. different rooms of a building. Access for customers to the storage section 800 is preferably restricted. The storage section 800 may for example be separated from the user-accessible retail section 900 by walls or they may e.g. be in different buildings. The rail system 108 of the storage section 800 is connected to rail system 8 of the retail section 900 so that the container handling vehicle 301 may drive on rails between the two sections. The container handling vehicle 301 may thus transport a side-accessible goods holder 130 from the storage section 800 to the retail section 900 by driving on the rails of the rail systems 8, 108, and vice versa. Lifting and lowering of a goods holder 130 in a storage column 10, 105 may be done in the exact same manner in the storage section 800 as in the retail section 900, and in the same way as described for the prior art automated storage and retrieval system 1.

The framework structure 100 of the storage section 800 is constructed in a similar manner to the prior art framework structure 100 described above in connection with Figs. 1-3, and may even be identical to this framework structure. That is, the framework structure 100 comprises a number of upright members 102 and comprises an upper rail system 108 extending in the X direction and Y direction. The framework structure 100 further comprises storage compartments in the form of storage columns 105 provided between the members 102 wherein goods holders 106, 130 are stackable in stacks 107 within the storage columns 105. The lifting device 600 may be guided by the corners of the upright members 102. An access station 115 as described in relation to Fig. 1 may be provided and it may be arranged adjacent the storage section 800, below the rails of the rail system 8, 108.

The framework structure 100' of the retail section 900 is constructed in a similar manner to the prior art framework structure 100 described above in connection with Figs. 1-3, and may even be identical to this framework structure. That is, the framework structure 100' comprises a number of upright members 20, and comprises an upper rail system 8 extending in the X direction and Y direction. The upright members 20 may be pillars or posts identical to the upright members 102 of the prior art framework structure shown in Fig. 1, or they may be walls. The upright members 20 may be used to guide vertical movement of the lifting device 600. The framework structure 100' of the retail section 900 further comprises storage compartments in the form of side-accessible storage columns 10 provided between the upright members 20 wherein goods holders 106, 130 are stackable in stacks 107 within the storage columns 10.

The framework structures 100, 100' can be of any size. In particular it is understood that the framework structure can be considerably wider and/or longer and/or deeper than disclosed in Fig. 1. For example, the framework structure 100, 100' may have a horizontal extent of more than 700x700 columns and a storage depth of more than twelve goods holders.

In Fig. 12 the storage section 800 is located above the user-accessible retail section 900 in a space efficient manner. The rail system 8 is arranged above the storage section 800. To provide customer access areas 90 or aisles, some storage columns 105 extend from the rails of the rail system 8 and only partway down towards the floor, so that enough space is provided below for customers to walk under these storage columns 105. The side-accessible storage columns 10 are arranged on the floor, extending partway up to the rails of the rail system 8. An access station 115 as described in relation to Fig. 1 may be provided and it may be arranged below overlying storage columns 105.

The framework structure 100" of the automated storage and retrieval system 2 in Fig. 12 is constructed in a similar manner to the prior art framework structure 100 described above in connection with Figs. 1-3, and may even be identical to this framework structure. That is, the framework structure 100" comprises a number of upright members 20, 102, and comprises an upper rail system 8 extending in the X direction and Y direction.

The framework structure 100" further comprises storage compartments in the form of storage columns 105 and side-accessible storage columns 10 provided between the members 20, 102 wherein goods holders 106, 130 are stackable in stacks 107 within the storage columns 10, 105.

The framework structure 100" can be of any size. In particular it is understood that the framework structure can be considerably wider and/or longer and/or deeper than disclosed in Fig. 1. For example, the framework structure 100 may have a horizontal extent of more than 700x700 columns and a storage depth of more than twelve containers.

In both Fig. 11 and Fig. 12, the side-accessible storage columns 10 are provided with a door 30 for allowing and preventing access to the stack of side-accessible goods holders 130. The door 30 may comprise a lock to lock the door 30 and thus prevent the door from being opened by a customer under certain circumstances, e.g. when a lifting device need access to a goods holder 130 in the stack 107.

It is also possible to combine storage above the user-accessible retail section and a storage section at another location.

According to additional aspects, there are provided:
A side-accessible goods holder comprising a storage area for storing product items and a closable side-access opening comprising a roller barrier operable to close the side opening while being moved to an access position by the moving device, and open the side access opening when the goods holder is at the access position.

A moving device for moving a side-accessible goods holder having a storage area for storing product items and a side-access opening, the moving device including a closure to close the side opening while moving the goods holder to an access position, and configured to remove the closure to open the side access opening when the goods holder is at the access position.

In the preceding description, various aspects of the delivery vehicle and the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

### LIST OF REFERENCE NUMBERS

- 1: Prior art automated storage and retrieval system
- 2: Automated storage and retrieval system
- 3: Storage system
- 5: Product items
- 7: Container handling device
- 8: First rail system
- 10: Side-accessible storage column
- 10V: Storage volume of side-accessible storage column
- 11: Access side of side-accessible storage column
- 20: Upright member of side-accessible storage column
- 30: Side-access barrier
- 90: User-access area
- 100, 100', 100": Framework structure
- 102: Upright members of framework structure 100
- 104: Storage grid
- 105: Storage column
- 106: Storage container
- 106': Particular position of storage container
- 107: Stack
- 108: Rail system
- 110: Parallel rails in first direction (X)
- 111: Parallel rails in second direction (Y)
- 112: Access opening
- 115: Access station
- 119: First port column
- 120: Second port column
- 130: Side-accessible goods holder
- 131: Base
- 132: First side wall of goods holder
- 132': Second side wall of goods holder
- 132": Third side wall of goods holder
- 132‴: Fourth side wall of goods holder
- 133: Divider wall
- 134: Side-access opening
- 135: First set of goods holder gripping structures
- 136: Barrier gripping structures
- 137a: Guide for overhead sectional barrier in side-access opening
- 137b: Guide for overhead sectional barrier in top opening
- 138: Activation interface
- 140: Detachable barrier
- 141, 141': Retractable barrier on goods holder
- 142: Barrier on lifting frame
- 143: Barrier on adapter
- 144: Cylindrical core of retractable barrier 141'
- 146: Slot
- 147: Guide post
- 148: Panel of detachable barrier
- 201: Prior art container handling vehicle
- 201a: Vehicle body of the container handling vehicle 201
- 201b: Drive means / wheel arrangement / first set of wheels in first direction (X)
- 201c: Drive means / wheel arrangement / second set of wheels in second direction (Y)
- 301: Prior art cantilever container handling vehicle
- 301a: Vehicle body of the container handling vehicle 301
- 301b: Drive means / first set of wheels in first direction (X)
- 301c: Drive means / second set of wheels in second direction (Y)
- 304: Gripping device
- 401: Prior art container handling vehicle
- 401a: Vehicle body of the container handling vehicle 401
- 401b: Drive means / first set of wheels in first direction (*X*)
- 401c: Drive means / second set of wheels in second direction (*Y*)
- 404: Gripping device
- 404a: Lifting band
- 404b: Gripper
- 404c: Guide pin
- 404d: Lifting frame
- 500: Control system
- 600, 600': Lifting device
- 601, 601': Lifting frame
- 602: Set of adapter gripping elements
- 604: Lifting band
- 605: First set of gripping elements of lifting device
- 606: Second set of gripping elements of lifting device
- 620: Adapter
- 625: Set of adapter gripping structures on adapter 620
- 701: Gantry crane
- 800: Storage section
- 900: User-accessible retail section
- *X*: First direction
- *Y*: Second direction
- *Z*: Third direction

## Claims

1. A method for handling a side-accessible goods holder having a storage area for storing product items and a side-access opening, the method comprising moving the goods holder to an access position with a moving device, closing the side-access opening while the moving device is moving the goods holder, and opening the side-access opening when the goods holder is at the access position.

2. The method of claim 1 for handling a goods holder (130) of an automated storage and retrieval system (2) during movement of the goods holder (130) by a moving device comprising a lifting device (600), the goods holder (130) optionally being stackable with other goods holders (130) in a storage column (10, 105) of the automated storage and retrieval system (2), wherein the goods holder (130) optionally comprises a base (131), a first side wall (132) arranged on a first side of the goods holder, a second side wall (132') arranged on a second side of the goods holder, the first and second side walls (132, 132') extending upwardly from the base (131) and forming the storage area (130S) for storing product items (5) therebetween, and wherein the side-access opening (134) allows access into the storage area (130S) from a third side of the goods holder (130), the method optionally further comprising:
when the goods holder (130) is being moved by the lifting device (600), closing the side-access opening (134) with a barrier (140, 141, 141', 142, 143) such that the product items (5) stored inside the storage area (130S) are prevented from falling out through the side-access opening (134); and/or wherein
when the goods holder (130) is placed in the storage column (105), opening the side-access opening by removing the barrier (140, 141, 141', 142, 143) from the side-access opening (134) by using the lifting device (600) to provide access to the product items (5) inside the goods holder from the third side of the container (130).

3. The method according to claim 1 or 2, wherein the step of closing the side-access opening (134) comprises using the lifting device (600) to move the barrier (141, 141') from a retracted position on the side-accessible goods holder (130) to an operating position on the side-accessible goods holder (130), in which operating position it covers the side-access opening (134), or wherein the lifting device (600) comprises a barrier (142, 143) configured to cover the side-access opening (134) of the side-accessible goods holder (130), wherein the step of closing the side access opening (134) comprises lowering the lifting device (600) until the barrier (142, 143) covers the side-access opening (134).

4. The method according to any of the preceding claims, comprising using a container handling vehicle (201, 301, 401) to transport the side-accessible goods holder (130) within an automated storage and retrieval system (2), wherein the goods holder (130) is transported from a storage section (800) of the system to a user-accessible retail section (900) of the system.

5. A side-accessible goods holder (130) comprising a storage area for storing product items and a closable side-access opening, the goods holder being configured to interact with a moving device to close the side opening while being moved to an access position by the moving device, and open the side access opening when the goods holder is at the access position.

6. The side-accessible goods holder (130) of claim 5 for use in a method according to any of claims 1-4, the goods holder (130) comprising a base (131), a first side wall (132) arranged on a first side of the goods holder (130), a second side wall (132') arranged on a second side of the goods holder (130), the second side being opposite the first side, the first and second side walls (132, 132') extending upwardly from the base (131) and forming the storage area (130S) for storing product items (5) therebetween, optionally wherein the goods holder (130) is configured for being stacked in a stack (107) of goods holders (130) in a storage column (105) of an automated storage and retrieval system (1) and optionally for being moved by a moving device comprising a lifting device (600) of the system (1), and optionally:
wherein the side-access opening (134) is configured to allow product items (5) to exit the storage area (130S) through the side-access opening (130), when open; and/or
wherein the side-access opening (134) is configured to be closed by receiving a barrier (140, 141, 141', 142, 143) for preventing the product items (5) from exiting the storage area (130S) through the side-access opening (134).

7. The goods holder (130) according to claim 5 or 6, wherein the side-access opening (134) is provided by an open side of the goods holder (130) or by an opening in a side wall (132", 132‴) of the goods holder (130).

8. The goods holder (130) according to any of claims 5 to 7, wherein the goods holder (130) comprises a detachable barrier (140, 142, 143), or wherein the goods holder (130) comprises a retractable barrier (141, 141') configured to move between an retaining position on the goods holder (130), in which it is received by and covers the side-access opening (134), and a non-retaining position on the goods holder (130), in which it is retracted away from the side-access opening (134), to enable user access to the storage area (130S) through the side-access opening (134).

9. The goods holder (130) according to claim 8, wherein the retractable barrier (141, 141') comprises an activation interface configured for engagement with a cooperative activation element on the lifting device (600).

10. A moving device for moving a side-accessible goods holder having a storage area for storing product items and a side-access opening, the moving device being configured to interact with a side-accessible goods holder to close the side-access opening while moving the goods holder to an access position, and open the side-access opening when the goods holder is at the access position.

11. The moving device according to claim 10, wherein the moving device comprises a lifting device (600) comprising:
a first set of gripping elements (605) for engaging with a corresponding first set of gripping structures (135) on the side-accessible goods holder (130), and/or
a barrier (142, 143) configured to cover the side-access opening (134) of the side-accessible goods holder (130) when the gripping elements (605) are engaged with the gripping structures (135) on the side-accessible goods holder (130), optionally wherein the barrier (142, 143) is retractably arranged on the lifting device (600), optionally pivotally arranged or wherein the lifting device (600) comprises a detachable adapter (620), and wherein the barrier (143) and the first set of gripping elements (605) are arranged on the adapter (620).

12. A system (3) comprising the side-accessible goods holder of any of claims 5 to 9 and the moving device of claim 10 or 11.

13. The system of claim 12, the moving device comprising a container handling device (7) comprising a lifting device (600) configured for lowering the side-accessible goods holders (130) to or raising the side-accessible goods holders (130) from a storage position in the storage column (105), and optionally:
wherein the side-access opening (134) is configured to receive a barrier (140, 141, 141', 142, 143) for preventing the product items (5) from falling out from the storage area (130S) through the side-access opening (134).

14. An automated storage and retrieval system (2) comprising a system (3) according to claim 12 or 13, wherein the container handling device (7) is configured to move within the automated storage and retrieval system (2).

15. The automated storage and retrieval system (2) according to claim 14:
comprising a user-accessible retail section (900) and a first rail system (8) arranged across the user-accessible retail section (900), wherein the user-accessible retail section (900) comprises a number of side-accessible storage columns (10), each side-accessible storage column (10) formed by a set of upright members (20) defining a storage volume (10V) therebetween for accommodating a stack (107) of side-accessible goods holders (130), wherein each side-accessible storage column (10) comprises an access side (11), and wherein the container handling device (7) is operable on the rail system (8),
and/or wherein at least some of the side-accessible storage columns (10) are provided with a side-access barrier (30) configured to be moved between a closed position and an open position;
and/or wherein when in the closed position, the side-access barrier (30) prevents access to the stack of goods holders (107) from a side of the storage column (105) and wherein when in the open position, the side-access barrier (30) allows access to the stack of goods holders (107);
and/or comprising a user access area (90) between two rows of storage columns (10, 105);
and/or wherein the user-accessible retail section (900) is connected to a storage section (800), the storage section (800) being provided with a second rail system (108) connected to the first rail system (8) for allowing transport of the side-accessible goods holder (130) from the storage section (800) to the user-accessible retail section (900) on the first and second rail systems (8, 108).
